# EUROPEAN PATENT SPECIFICATION

(11) **EP 2 647 853 B1**
(45) Date of publication and mention of the grant of the patent: **27.08.2014**
(21) Application number: 12188002.5
(22) Date of filing: 10.10.2012
(51) Int. Cl.: F16C 1/26

(54) **Sheath for transmission cables and method for its manufacture**
Hülle für Übertragungskabel und Verfahren zu ihrer Fertigung
Gaine pour câbles de transmission et procédé pour sa fabrication

(30) Priority: 05.04.2012 IT TO20120301
(43) Date of publication of application: 09.10.2013
(73) Proprietor: Brasola S.r.l., 10061 Cavour (TO) (IT)
(72) Inventor: Brasola, Lino, I-10061 Cavour (Torino) (IT)
(74) Representative: Marchitelli, Mauro

(56) References cited:
- DE-U1- 8 911 770
- JP-A- 61 062 614
- US-A- 2 129 303

## Description

### Field of invention

The present invention relates in general to so-called Bowden cables used for mechanical transmission of a control. A Bowden transmission cable comprises a sheath into which a metal transmission cable is slidably inserted.

More precisely, the present invention relates to a sheath for transmission cables and a method for its manufacture.

### Description of the Prior Art

The Bowden cable sheath is generally composed of several layers, including an internal spiral formed by a flat or round wire and an outer casing of plastic material. At each end of the sheath, a sheath terminal is usually placed, formed from a metallic element that allows the sheath to remain intact and to avoid ruining the spiral during use. An inner sleeve can also be provided that allows reduction of the friction between the internal spiral of the sheath and the metal cable that runs within it.

Sheaths of this type, at rest, usually have a rectilinear shape. When the sheaths are installed along curved paths, fastening elements are generally required to constrain the sheaths to travel along non-rectilinear paths.

In certain applications, it is desirable that the sheath of a Bowden transmission device has a non-rectilinear shape at rest, with a two-dimensional or three-dimensional shape corresponding to the path of the cable under the conditions of use. This simplifies the mounting of the transmission device as it avoids the need to prearrange the various anchorage points in order for a sheath with a rectilinear shape at rest to follow the desired path.

In these cases sheaths formed by metal tubes bent according to the desired profile are generally used. The drawback of this solution is that it is necessary to provide separate components to form the sheath terminals, and fastening elements for fastening the sheath to the fixed structure. These solutions entail the management of a large number of components and a large expenditure of time for the assembly of the sheath terminals and the fastening devices to the bent metal tube. Furthermore, solutions that envisage a sheath formed from a bent metal tube are generally expensive and have a relatively high weight.

The Italian patent no. 1373743 describes a sheath for transmission cables comprising an inner tubular core, a plurality of reinforcement wires wound around the inner core, a containment wire wound around the reinforcement wires and an outer casing of plastic material, wherein the winding power and the winding step of the containment wire around the reinforcement wires are determined in such a way as to confer a plastic behaviour to the sheath. This sheath is able to maintain a non-rectilinear shape at rest.

DE8911770 discloses a method of manufacturing a tubular sheath and a tubular sheath for a control cable according to the preamble of claims 1 and 2, wherein the tubular sheath has a section of bending-resistant material bent according to an S-shape, so that the actuating cable inside the tubular sheath rests on at least two points.

### Object and summary of the invention

The object of the present invention is to provide an improved sheath for transmission cables with a non-rectilinear shape at rest.

According to the present invention, this object is achieved by a sheath and by a method for its manufacture having the characteristics forming the subject of claims 1 and 2.

The claims form an integral part of the teachings herein provided in relation to the invention.

### Brief description of the drawings

The present invention will now be described in detail with reference to the attached drawings, provided purely by way of non-limiting example, wherein:
- Figure 1 is a perspective view of a sheath according to the invention,
- Figure 2 is a partially sectioned plan view of the sheath of Figure 1, and
- Figure 3 is an exploded perspective view of a piece of equipment for the production of sheaths according to the present invention.

### Detailed description of embodiments of the invention

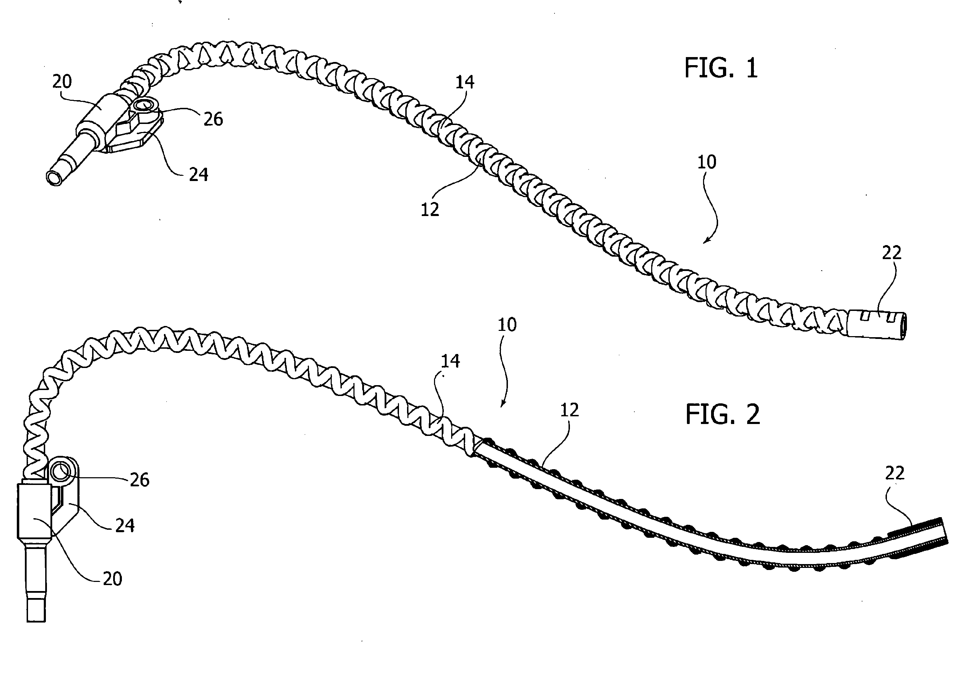

With reference to Figures 1 and 2, numeral 10 indicates a sheath for transmission cables according to the present invention. The sheath 10 comprises an extruded tube of flexible plastic material 12. On the outer surface of the tube 12 a stabilization formation 14 is applied, which imparts a non-rectilinear shape to the extruded tube 12 at rest. Figures 1 and 2 show the shape of the sheath 10 at rest.

The stabilization formation 14 is formed of plastic material and is applied by means of co-moulding on the outer surface of the extruded tube 12, while the tube is bent into the desired non-rectilinear shape. The co-moulded stabilization formation 14 has the object of stably retaining the tube 12 in the desired non-rectilinear shape.

The stabilization formation 14 comprises at least one rib projecting from the initially smooth outer surface of the extruded tube 12. The stabilization formation 14 has a helical shape with two opposing starts. The stabilization formation 14 does not fully cover the outer surface of the tube 12. The stabilization formation 14 in fact presents a plurality of windows with no co-moulded material, and in which the outer surface of the extruded tube 12 is exposed.

The sheath 10 is provided at its ends with sheath terminals 20, 22 of plastic material. The first sheath terminal 20 is formed by an element of plastic material which is permanently fixed to the end of the extruded tube 12 at the co-moulded material constituting the stabilization formation 14. The first sheath terminal 20 may also be equipped with a fastening portion 24, obtained by co-moulding of plastic material. The fastening portion 24 may comprise a bushing of metallic material 26 surrounded by moulded plastic material. The second sheath terminal 22 may be formed by co-moulding of plastic material on the corresponding end of the flexible tube 12.

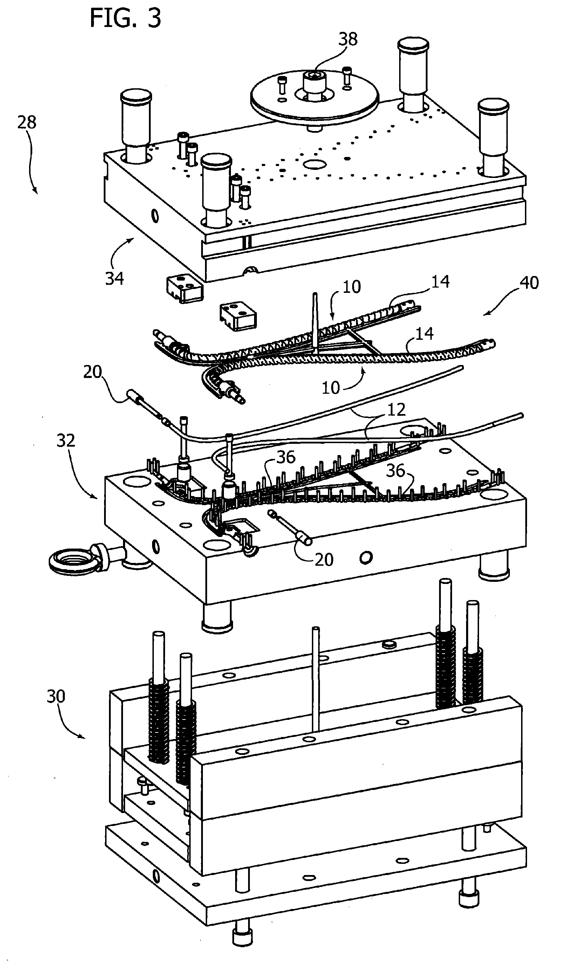

In Figure 3, numeral 28 indicates a piece of equipment for the manufacture of the sheath 10 according to the present invention. The equipment 28 comprises a support structure 30 carrying two half-moulds 32, 34 movable relative to each other between an open position and a closed position. The half-moulds 32, 34 define one or more moulding cavities 36 with a complementary shape to the outer surface of the sheath 10 in its desired resting form. The moulding cavities 36 are equipped with positioning formations located at areas corresponding to the windows of the sheath 10, i.e. where the stabilization formation 14 is not present. In the example shown in Figure 3 the half-moulds 32, 34 have two injection cavities 36. The equipment 28 comprises an injection channel 38 through which the plastic material is injected into the injection cavity 36.

The method for the manufacture of the sheaths 10 envisages the arrangement of the extruded tubes of flexible plastic material 12 within the injection cavities 36 of one of the two half-moulds 32, 34. The tubes 12 initially have a resting rectilinear shape and a smooth outer surface. The elements 20 are also positioned in the injection cavities 36, and are destined to form the sheath terminals and possibly the metallic inserts 26 of the fastening portions 24. The tubes 12 are retained in the curved positions, corresponding to the desired shape, by positioning formations present on the inner surfaces of the injection cavities 36.

Then, the half-moulds 32, 34 are closed and plastic material is injected into the injection cavities 36 via the injection channel 38. The plastic material injected into the injection cavities 36 fills the free space between the outer surfaces of the tubes 12 and the walls of the injection cavities 36. The injected plastic clings permanently to the outer surfaces of the tubes 12. The injection of the plastic material is followed by a cooling step. Then, the half-moulds 32, 34 are opened and a semi-finished product 40 is extracted, including two sheaths 10 held together by scrap plastic material that fills the distribution channels of the injected plastic material. The sheaths 10 are then separated from the scrap plastic material. After the moulding step, the sheath 10, at rest, maintains the same shape as the injection cavity 36.

The sheath obtained is flexible and is equipped with sheath terminals and fastening elements, provided if necessary with metal bushings. Accessory components for fastening the sheath or to impart the desired shape to the sheath are not necessary. The sheath according to the invention is lighter and cheaper than the existing sheaths. The stabilization formation which imparts the rectilinear shape to the sheath at rest also has the function of stiffening and strengthening the extruded tube 12 of plastic material.

## Claims

1. Method for manufacturing a sheath for transmission cables, comprising the steps of:
- providing an extruded tube (12) of flexible plastic material having a rectilinear form at rest,
- arranging said extruded tube in a mould (32, 34) having an injection cavity (36) with a non-rectilinear shape,
- injecting plastic material into said injection cavity (36) so as to form a stabilization formation (14) on the outer surface of said extruded tube (12) which gives the tube (12) an essentially non-rectilinear shape at rest, corresponding to the shape of said injection cavity (36),
wherein said stabilization formation (14) comprises at least one raised rib projecting from the outer surface of said tube (12),
**characterised in that** said raised rib has a helical shape with two opposing starts.

2. Sheath for transmission cables comprising an extruded tube of flexible plastic material (12) and a stabilization formation (14) injection-moulded on the outer surface of the flexible tube (12), wherein the stabilization formation (14) confers a non-rectilinear form to the tube (12) at rest, wherein said stabilization formation (14) comprises at least one raised rib projecting from the outer surface of said tube (12),
**characterised in that** said raised rib has a helical shape with two opposing starts.

3. Sheath according to claim 2, comprising a pair of sheath terminals (20, 22) applied to opposite ends of said tube (12) by means of co-moulding.

## Patentansprüche

1. Verfahren zur Fertigung einer Hülle für Übertragungskabel, das folgende Schritte umfasst:
- Bereitstellen eines extrudierten Schlauches (12) aus flexiblem Kunststoffmaterial, der in Ruhe eine geradlinige Form hat,
- Anordnen des extrudierten Schlauches in einer Form (32, 34) mit einem Spritzhohlraum (36) mit einer ungeradlinigen Form,
- Einspritzen von Kunststoffmaterial in den Spritzhohlraum (36), um auf der Außenfläche des extrudierten Schlauchs (12) ein Stabilisierungsgebilde (14) auszubilden, das dem Schlauch (12) in Ruhe eine im wesentlichen ungeradlinige Form verleiht, welche der Form des Spritzhohlraums (36) entspricht,
wobei das Stabilisierungsgebilde (14) mindestens eine erhabene Rippe umfasst, die aus der Außenfläche des Schlauchs (12) hervortritt,
**dadurch gekennzeichnet, dass** die erhabene Rippe eine Wendelform mit zwei einander entgegengesetzten Anfängen hat.

2. Hülle für Übertragungskabel, umfassend einen extrudierten Schlauch aus flexiblem Kunststoffmaterial (12) und ein auf die Außenfläche des flexiblen Schlauchs spritzgegossenes Stabilisierungsgebilde (14), wobei das Stabilisierungsgebilde (14) dem in Ruhe befindlichen Schlauch (12) eine ungeradlinige Form verleiht, wobei das Stabilisierungsgebilde (14) mindestens eine erhabene Rippe umfasst, die aus der Außenfläche des Schlauchs (12) hervortritt,
**dadurch gekennzeichnet, dass** die erhabene Rippe eine Wendelform mit zwei einander entgegengesetzten Anfängen hat.

3. Hülle nach Anspruch 2, umfassend ein Paar von Hüllenabschlüssen (20, 22), die durch Co-Spritzgießen an den entgegengesetzten Enden des Schlauchs (12) angebracht sind.

## Revendications

1. Procédé pour fabriquer une gaine pour des câbles de transmission, comprenant les étapes consistant à :
prévoir un tube extrudé (12) réalisé à partir d'une matière plastique souple ayant une forme rectiligne au repos,
agencer ledit tube extrudé dans un moule (32, 34) ayant une cavité d'injection (36) avec une forme non rectiligne,
injecter la matière plastique dans ladite cavité d'injection (36) afin de former une formation de stabilisation (14) sur la face externe dudit tube extrudé (12) qui donne au tube (12) une forme essentiellement non rectiligne au repos, correspondant à la forme de ladite cavité d'injection (36),
dans lequel ladite formation de stabilisation (14) comprend au moins une nervure relevée faisant saillie de la surface externe dudit tube (12),
**caractérisé en ce que** ladite nervure relevée a une forme hélicoïdale avec deux débuts opposés.

2. Gaine pour câbles de transmission comprenant un tube extrudé en matière plastique souple (12) et une formation de stabilisation (14) moulée par injection sur la surface externe du tube flexible (12), dans laquelle la formation de stabilisation (14) confère une forme non rectiligne au tube (12) au repos, dans laquelle ladite formation de stabilisation (14) comprend au moins une nervure relevée faisant saillie de la surface externe dudit tube (12),
**caractérisée en ce que** ladite nervure relevée a une forme hélicoïdale avec deux débuts opposés.

3. Gaine selon la revendication 2, comprenant une paire de bornes de gaine (20, 22) appliquées sur des extrémités opposées dudit tube (12) au moyen du co-moulage.
